# EUROPÄISCHE PATENTANMELDUNG

(11) **EP 1 284 365 A2**
(43) Veröffentlichungstag der Anmeldung: **19.02.2003**
(21) Anmeldenummer: 02017223.5
(22) Anmeldetag: 31.07.2002
(51) Int. Cl.: F03D 11/04

(54) **Kran für eine Windkraftanlage**

(30) Priorität: 14.08.2001 DE 20113472 U; 10.09.2001 DE 20114909 U
(71) Anmelder: Liebherr-Werk Biberach GmbH, 88400 Biberach an der Riss (DE)
(72) Erfinder: Mollhagen, Klaus Peter, 87700 Memmingen (DE)
(74) Vertreter: Gossel, Hans K., Dipl.-Ing.

(57) **Zusammenfassung**

Eine Windkraftanlage mit einem auf einem Turm montierten, drehbar gelagerten Maschinenrahmen, einem Maschinengehäuse oder mit einer drehbar gelagerten Plattform, die die Rotorwelle mit Rotor, das Getriebe und den Generator tragen, ist mit einem Kran ausgestattet. Um mit dem Kran die erforderlichen Werkzeuge und Gegenstände zur Wartung und Reparatur auf den Maschinenrahmen oder die die Maschinen tragende Plattform heben zu können, sind zwei zueinander parallell oder schräg verlaufende, mit dem Maschinenrahmen verbundene Träger mit Laufbahnen für einen Brückenträger vorgesehen, auf dem ein Laufkatze mit Kranhaken verfahrbar geführt ist.

## Beschreibung

Die Erfindung betrifft einen Kran für eine Windkraftanlage mit einem auf einem Turm montierten, drehbar gelagerten Maschinenrahmen, einem Maschinengehäuse oder mit einer drehbaren Plattform, die die Rotorwelle mit Rotor, das Getriebe und den Generator tragen.

Windkraftanlagen werden gegenwärtig auf Türmen mit einer Höhe von 100 m und mehr, einem Rotordurchmesser bis 100 m und mehr und Nennleistungen bis über 3000 kW gebaut. Sie bestehen aus einem an einer Turmspitze drehbar gelagerten Maschinenrahmen, der die Rotorwelle mit Rotor, das Getriebe und den Generator trägt. Um zur Wartung und zur Reparatur die notwendigen Mittel und Werkzeuge auf den Maschinenrahmen o.dgl. bringen zu können, sind geeignete Kräne erforderlich. Grundsätzlich ist es möglich, an Windkraftanlagen Mobilkräne, beispielsweise Teleskopkräne, heranzufahren und mit diesen die für eine Wartung und Reparatur benötigten Gegenstände zu der Maschineneinheit zu transportieren. Abgesehen davon, daß nicht immer ein Mobilkran zur Verfügung stehen wird, ist es schwierig, diesen bei einem unwegsamen Gelände an die Windkraftanlage heranzufahren. Völlig unmöglich ist es, Offshore-Windkraftanlagen mit Mobilkränen zu bedienen.

Aufgabe der Erfindung ist es daher, einen Kran der eingangs angegebenen Art zu schaffen, mit dem sich die erforderlichen Werkzeuge und Gegenstände zur Wartung und Reparatur auf den Maschinenrahmen oder die die Maschinen tragende Plattform heben lassen.

Erfindungsgemäß wird diese Aufgabe bei einem Kran der eingangs angegebenen Art durch zwei zueinander parallele oder schräg verlaufende, mit dem Maschinenrahmen o. dgl. verbundene Träger mit Laufbahnen für einen Brückenträger gelöst, auf dem eine Laufkatze mit Kranhaken verfahrbar geführt ist.

Der erfindungsgemäße Brückenkran läßt sich kostengünstig mit dem Maschinenrahmen, dem Maschinengehäuse oder der Plattform verbinden, so daß er als stationärer Kran trotz seines seltenen Gebrauchs verbleiben kann, weil die Kosten eines derartigen Brückkrans die Gesamtkosten einer Windkraftanlage nur unwesentlich erhöhen und sich der Brückenkran schon nach einigen Wartungszyklen amortisiert hat.

Nach einer bevorzugten Ausführungsform ist vorgesehen, daß die Träger mit den Laufbahnen die an dem Maschinenrahmen o. dgl. schwenkbar gelagerten Schenkel einer Auslegerschwinge eines Auslegerkrans sind. Diese Ausgestaltung ermöglicht es, den Brückenkran nur für geringere Lasten auszulegen und den Auslegerkran zum Heben größerer Lasten auszubilden, beispielsweise zum Heben der Rotorblätter, des Getriebes und des Generators, der ein Gewicht bis 40 t und mehr aufweisen kann.

Aus EP 0 783 630 B1 und EP 1 101 934 A2 sind Windkraftanlagen mit Auslegerkränen bekannt, die mit V- oder U-förmigen Auslegerschwingen versehen sind, deren Schenkel an dem Maschinenrahmen bzw. dem Maschinengehäuse schwenkbar gelagert sind. Die bekannten Auslegerschwingen sind in einer vertikalen Ebene, die durch die Mittellinie der Rotorwelle verläuft, über Kopf wippbar, so daß der Auslegerkran sowohl Teile unterhalb der Rotornabe, also beispielsweise die Rotorblätter, als auch auf der anderen Turmseite den Generator heben kann, so daß ein Austausch schwerer Komponenten der Maschineneinheit vorgenommen werden kann, wenn sich dies als notwendig erweisen sollte. Bei den bekannten Kränen ist eine Winde entweder auf dem Sockel des Turms oder auf dem Maschinenrahmen vorgesehen, so daß es notwendig ist, das Hubseil über eine Seilrolle zu führen oder in Seilrollen einzuscheren, die sich an dem freien Ende der Auslegerschwinge befinden. Durch diese Ausgestaltung geht nicht nur Raum verloren, sondern der Auslegerkran verteuert sich auch durch die stationäre Anordnung der Winde.

Eine weitere Aufgabe der Erfindung besteht daher darin, einen Auslegerkran für Windkraftanlagen zu schaffen, der sich mit verringerten Kosten installieren läßt.

Diese Aufgabe wird durch eine erfindungsgemäße Weiterbildung des erfindungsgemäßen Krans erreicht, die darin besteht, daß die Schenkel an ihren den Schwenklagern gegenüber liegenden Enden durch ein Querjoch miteinander verbunden sind, das mit Lastaufnahmemitteln versehen ist. Diese Lastaufnahmemittel bestehen vorzugsweise in einer kompletten Winde, auf die ein Hubseil mit Lasthaken aufwickelbar und von dieser abwickelbar ist, so daß auf eine stationäre Winde mit das Hubseil umlenkenden Umlenkrollen verzichtet werden kann. Um schwerere Lasten zu heben, können an dem Querjoch auch zwei Winden montiert werden, die mit Synchronantrieben für das Hubseil versehen sind.

Der erfindungsgemäße Brückenkran läßt sich günstigerweise mit dem Auslegerkran dadurch kombinieren, daß die Schenkel des Auslegerkrans gleichzeitig die Laufbahnen für den Brückenkran bilden. Um den Auslegerkran in Betrieb nehmen zu können, ist es möglich, durch den Brückenkran die an dem Querjoch zu montierenden Winden mit Hubseil und Kranhaken aufzuziehen. Auf diese Weise können die Winden von Einsatzort zu Einsatzort transportiert werden, ohne ständig mit dem Auslegerkran verbunden zu sein, was den Betrieb des Auslegerkrans noch wirtschaftlicher macht.

Es wird auch Schutz für einen Kran ohne den Brückenkran beansprucht, also für einen Kran, der mit einer mit dem Maschinenrahmen o. dgl. schwenkbar verbundenen Auslegerschwinge versehen ist, die an ihrem äußeren Ende mindestens eine Winde für mindestens ein mit einem Lasthaken versehenes Seil trägt.

Ein Ausführungsbeispiel der Erfindung wird nachstehend anhand der Zeichnung näher erläutert. In dieser zeigt
- Fig. 1: eine perspektivische Ansicht eines an einer Turmspitze drehbar gelagerten Maschinenrahmens einer Windkraftanlage ohne Maschineneinheit, also ohne Rotorwelle mit Rotor und Generator, der mit einer Auslegerschwinge versehen ist, deren in eine horizontale Ebene geschwenkten Schenkel die Laufbahnen für einen Brückenträger bilden, in schematischer Darstellung und
- Fig. 2a-f: die als Auslegerkran eingesetzte oder umgerüstete Auslegerschwinge.

Auf einem nicht dargestellten Turm ist in bekannter Weise über einen nicht dargestellten Drehkranz mit Drehantrieb eine Plattform 1 um eine vertikale Achse drehbar gelagert, mit der ein Maschinengehäuse oder ein Maschinenrahmen 2 verbunden ist. Auf dem Maschinenrahmen 2 sind die Rotorwelle mit Rotor, Getriebe und Generator angeordnet, beispielsweise wie es in EP 0 783 630 B1 und EP 1 101 934 A2 beschrieben worden ist.

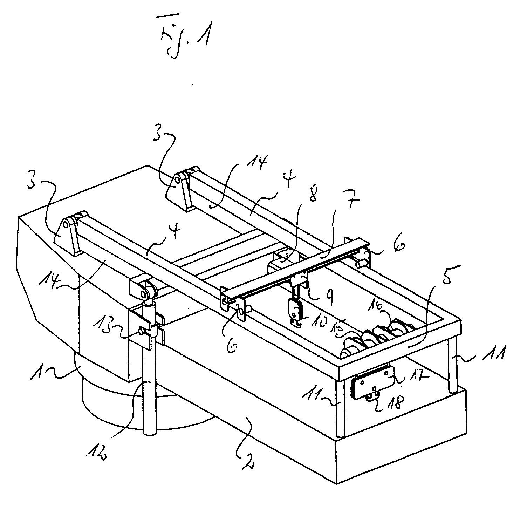

Auf der dem nicht dargestellten Rotor zugewandten Seite des Maschinenrahmens 2 sind in Lagerböcken 3 die parallel zueinander verlaufenden Schenkel 4 gelagert, die an ihrem freien Ende durch ein Querjoch 5 zu einer U-förmigen Auslegerschwinge 4, 5 verbunden sind. Die Schenkel 4 bilden in der aus Fig. 1 ersichtlichen Weise die Laufbahnen für die Laufwagen 6 eines Brückenträgers 7, der in bekannter Weise mit Fahrschienen für eine mit einem Antrieb 8 versehene Laufkatze 9 ausgestattet ist. Die Schenkel der U-förmigen Auslegerschwinge können auch schräg zueinander verlaufen. Die den Brückenträger tragenden Laufwagen sind sodann entsprechend auf den schrägen Verlauf der Schenkel anzupassen, die die Laufbahnen für diese bilden. Die Laufkatze 9 ist mit einer Winde versehen, deren Hubseil in üblicher Weise in eine mit einem Kranhaken versehene Unterflasche 10 eingeschert ist. Die Laufkatze mit Antrieb ist üblicher Bauweise und wird daher nicht näher beschrieben.

In Fig. 1 liegt die Auslegerschwinge 4, 5 in einer horizontalen Ebene, in der sie im Bereich des Querjochs 5 auf seitlichen Säulen 11 abgestützt ist, die mit dem Maschinenrahmen verbunden sind.

Die Auslegerschwinge 4, 5 ist durch seitliche Wippzylinder 12, die schwenkbar mit dem Maschinenrahmen in Schwenkgelenken 13 verbunden sind, wippbar. Die Schwenkzylinder 12 sind an zu den Schenkeln 4 parallelen Schwenkhebeln 14 angelenkt, die um dieselben Achsen schwenkbar sind wie die Schenkel 4, und auf denen die Schenkel 4 in ihren nach rechts geschwenkten Stellungen aufliegen.

Um die Auslegerschwinge 4, 5 auch als Auslegerkran betreiben zu können, wird mit dem Brückenkran 6-10 mindestens eine der im dargestellten Ausführungsbeispiel zwei Winden 15, 16 vom Boden aufgezogen und an dem Querjoch befestigt. Die Winden 15, 16 sind mit Synchronantrieben versehen, so daß die von den Winden abrollbaren und auf diese aufwickelbaren Hubseile einen an einem Träger 17 befestigen Kranhaken 18 tragen können, wobei der Träger 17 beim Heben und Senken parallel zu sich selbst bleibt.

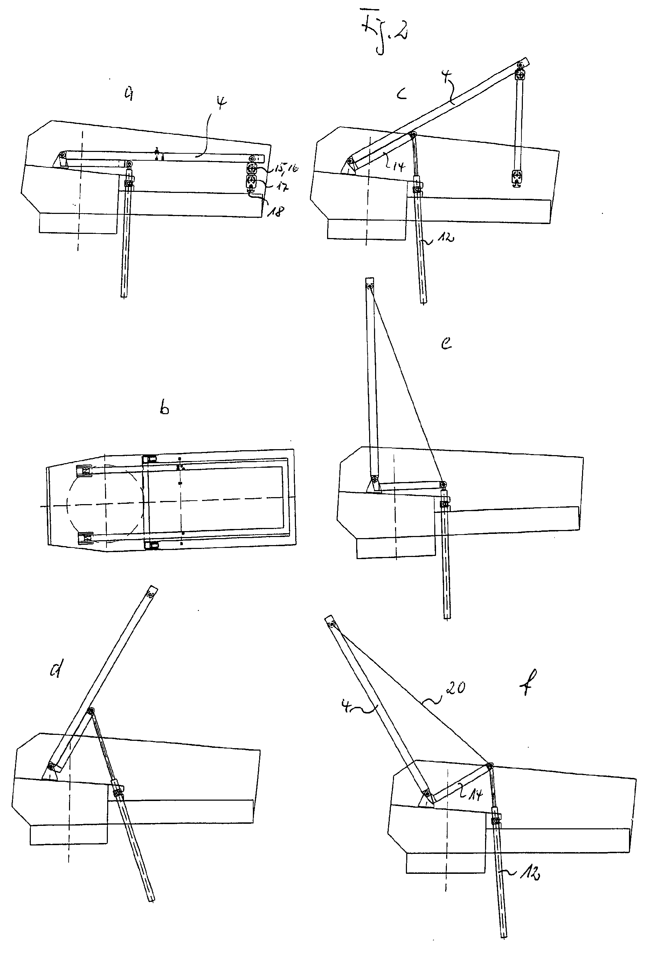

Fig. 2a zeigt den Maschinenrahmen mit Auslegerschwinge 4, 5 in einer der Fig. 1 entsprechenden Stellung. Soll die Auslegerschwinge als Auslegerkran betrieben werden, werden durch den Brückkran 6-10 die Winden 15, 16 und der Träger 17 mit Kranhaken 18 aufgezogen und an dem Querjoch 5 befestigt. Durch die Wippzylinder 12, deren Kolbenstangen an dem Schwenkhebel 14 angelenkt sind, läßt sich sodann die Auslegerschwinge 4,5 in der aus den Fig. 2c und 2d ersichtlichen Weise wippen, so daß beispielsweise der auf dem weiter auskragenden Teil des Maschinenrahmens 1 gelagerte Generator abgesenkt oder eingehoben werden kann.

Sollen mit dem Auslegerkran beispielsweise Rotorblätter gehoben und montiert werden, wird die Ausleserschwinge 4, 5 in der aus den Fig. 2e und 2f ersichtlichen Weise über Kopf auf die linke Seite geschwenkt, wobei die freien Ende der Schenkel 4 gegenüber den freien Enden der in der dargestellten Weise abgeklappten schwenkbaren Hebel 14 durch Abspannseile 20 abgespannt sind, so daß sich auch in der nach links geschwenkten Stellung die Auslegerschwinge durch die Wippzylinder 12 wippen läßt.

Grundsätzlich ist es möglich, den Brückenkran in einer leicht geneigten Stellung der Auslegerschwinge 4, 5 noch zu betreiben. Wird die Auslegerschwinge jedoch als Auslegerkran betrieben, wird der Brückenkran 6-10 mit den Schenkeln 4 der Auslegerschwinge verriegelt.

## Patentansprüche

1. Kran für eine Windkraftanlage mit einem auf einem Turm montierten, drehbar gelagerten Maschinenrahmen (2), einem Maschinengehäuse oder mit einer drehbar gelagerten Plattform, die die Rotorwelle mit Rotor, das Getriebe und den Generator tragen,
**gekennzeichnet durch**
zwei zueinander parallele oder schräg verlaufende, mit dem Maschinenrahmen (2) o.dgl. verbundene Träger (4) mit Laufbahnen für einen Brückenträger (7), auf dem eine Laufkatze (9) mit Kranhaken (10) verfahrbar geführt ist.

2. Kran nach Anspruch 1, **dadurch gekennzeichnet, daß** die Träger (4) mit den Laufbahnen die an dem Maschinenrahmen (2) o.dgl. schwenkbar gelagerten Schenkel einer Auslegerschwinge (4, 5) eines Auslegerkrans sind.

3. Kran nach Anspruch 2, **dadurch gekennzeichnet, daß** die Schenkel (4) an ihren den Schwenklagern (3) gegenüberliegenden Enden durch ein Querjoch (5) miteinander verbunden sind, das mit Lastaufnahmemitteln (15-18) versehen ist.

4. Kran für Windkraftanlagen nach dem Oberbegriff des Anspruchs 1,
**gekennzeichnet durch** eine dem Maschinenrahmen (2) o.dgl. schwenkbar verbundene Auslegerschwinge (4, 5), die an ihrem äußeren Ende mindestens eine Winde für mindestens ein mit einem Lasthaken versehenes Seil trägt.
